# EUROPÄISCHE PATENTSCHRIFT

(11) **EP 1 389 544 B1**
(45) Veröffentlichungstag und Bekanntmachung des Hinweises auf die Patenterteilung: **29.08.2007**
(21) Anmeldenummer: 03014633.6
(22) Anmeldetag: 26.06.2003
(51) Int. Cl.: B60J 1/20

(54) **Fensterrollo mit Kupplungsmechanismus**
Roller blind with coupling mechanism
Store à enrouleur avec un méchanisme d' accouplement

(30) Priorität: 14.08.2002 DE 10237231
(43) Veröffentlichungstag der Anmeldung: 18.02.2004
(73) Patentinhaber: BOS GmbH & Co. KG, 73760 Ostfildern (DE)
(72) Erfinder: Hansen, Melf, 73666 Baltmannsweiler (DE); Walter, Herbert, 73061 Ebersbach (DE)
(74) Vertreter: Rüger, Barthelt & Abel Patentanwälte

(56) Entgegenhaltungen:
- EP-A- 1 211 111
- DE-A- 3 345 503
- DE-A- 19 943 243

## Beschreibung

Es ist bekannt, zum Regulieren des Lichteintritts in das Innere von Kraftfahrzeugen, Fensterrollos zu verwenden. Solche Fensterrollos weisen eine üblicherweise verdeckt angeordnete Wickewelle auf, an der mit einer Kante die Rollobahn befestigt ist. Mittels eines Federmotors wird die Wickelwelle im Sinne des Aufwickelns der Rollobahn auf die Wickelwelle vorgespannt. Die Rollobahn läuft durch einen Schlitz aus, der in der Fensterbrüstung, der Dachoberkante oder der Hutablage vorgesehen ist.

Um die Rollobahn gespannt zu halten, ist ein Zugstab vorgesehen, der endseits in wenigstens einer Führungsschiene geführt ist. Im Falle der Verwendung von zwei Führungsschienen ist der Zugstab beidends geführt, wobei er in der Regel beim Ein- und Ausfahren eine teleskopartige Verlängerung und Verkürzung erfährt, da die Fenster von Kraftfahrzeugen nicht streng rechteckig sind.

Das Verschieben des Zugstabs längs den Führungsschienen gegen die Wirkung des Federmotors erfolgt mit Hilfe linienförmiger biegsamer Betätigungselemente. Sie sind ähnlich einem Bowdenzug ausgeführt und bestehen aus einer zylindrischen Seele oder einem zylindrischen Kernelement, das auf seiner Außenseite eine schraubenförmig verlaufende Rippe trägt. Auf diese Art entsteht eine Art Zahnstange, die ringsum verzahnt ist. Der Außendurchmesser des Betätigungselementes ist so gewählt, dass er im Wesentlich knicksteif in der Führungsnut der Führungsschiene geführt werden kann, ohne dass das Betätigungselement aus dem Schlitz der Führungsnut austreten kann.

Bei den bisher bekannten Anordnungen besteht eine stumpfe Verbindung zwischen dem betreffende Ende des Betätigungselementes und dem Führungskörper der Zugstange, der in der Führungsnut läuft. Diese stumpfe Verbindung ist lediglich in der Lage Druckkräfte zu übertragen.

Zum Aus- und Einfahren ist ein Getriebemotor vorgesehen, dessen Ausgangswelle ein Zahnrad trägt, dass mit dem Betätigungselement kämmt. Ein Vorschieben des Betätigungselementes bewirkt ein Abziehen der Rollobahn von der Wickelwelle und das Aufspannen der Rollobahn. Die Rollobahn wird dabei durch die Kraft des Federmotors gespannt gehalten.

Das Einfahren geschieht, indem durch Ändern der Drehrichtung der Elektromotor das Betätigungselement aus der Führungsnut zurückzieht, um es dem Zugstab zu ermöglich, sich in Richtung auf die Wickelwelle zu bewegen.

Im Sinne eines möglichst geringen Platzbedarfs der Wickelwelle wird diese mit einem geringen Außendurchmesser ausgeführt. Es sind demzufolge sehr viele Umdrehungen notwendig, um die Rollbahn zur Gänze aufzwickeln. Selbst bei Verwendung eines Federmotors mit einem relativ langen Federweg unterscheidet sich folglich das Aufwickeldrehmoment am Auszugsende erheblich von dem am Anfang. Hinzu kommt, dass bei vollständig aufgewickeltem Rollo der effektive Durchmesser und damit der Hebelarm groß ist. Bei einer vertretbaren Spannung in der Rollobahn bei vollständig ausgefahrener Rollobahn wird die Kraft, die den Zugstab zurückzieht, gegen Ende der Einfahrbewegung verhältnismäßig klein.

Unter ungünstigen Umständen kann der Zugstab kurz vor dem vollständigen Einfahren stecken bleiben. Das Steckenbleiben wird durch geringe Klemmkräfte der Führungskörper in der Führungsschiene begünstigt. Wegen der Breitenveränderung müssen im Interesse einer Klapperfreiheit die Führungskörper federvorgespannt sein, womit sie einer beträchtlichen Reibung in der Führungsschiene unterliegen

In der DE 199 43 243 A1 ist eine Sonnenschutzeinrichtung für doppelwandige Fensterscheiben von Fahrzeugen beschrieben. Die Anordnung umfasst zwei seitlich neben der Rollobahn angeordnete Führungsschienen. Die Führungsschienen erstrecken sich parallel zu der Bewegungsrichtung der Rollobahn beim Ein- und Ausfahreninnerhalb der doppelwandigen Fensterscheibe. In jeder der C-förmigen Führungsschiene befindet sich ein als Permanentmagnet ausgebildetes Kopplungselement, das auch quer zur Bewegungsrichtung bewegbar ist. Außerhalb der Führungsschiene läuft neben dieser auf einem Linearantrieb ein zweites Koppelglied, das magnetisch mit dem ersten Koppelglied innerhalb der Doppelscheibe gekoppelt ist. Durch Umpolen der Magnetrichtung des äußeren Kopplungselementes kann das unmittelbar mit der Rollobahn verbundene Koppelelement quer zur Bewegungsrichtung hin und her geschoben werden, um das innerhalb der Führungsschiene laufende Koppelelement zu arretieren.

Ausgehend hiervon ist es Aufgabe der Erfindung, ein Fensterrollo für Kraftfahrzeuge zu schaffen, bei dem die Betätigungselemente für den Zugstab sowohl Zug- als auch Druckkräfte auf den Zugstab übertragen können.

Diese Aufgabe wird erfindungsgemäß durch das Fensterrollo mit den Merkmalen des Anspruches 1 gelöst.

Bei dem neuen Fensterrollo wird die Rollobahn mittels einer Wickelwelle und vorzugsweise eines Federmotors auf die Wickelwelle aufgewickelt. An der von der Wickelwelle abliegenden Kante der Rollobahn ist eine Zugstabanordnung angebracht, von der ein Führungskörper in wenigstens einer Führungsnut einer Führungsschiene läuft. Der Führungskörper und das Betätigungselement sind jeweils mit Kupplungshälften versehen, die zumindest einmal ein Einkuppeln ermöglichen. Eine solche Verbindung ist im Sinne der Erfindung auch beispielsweise eine Rastverbindung, die betriebsmäßig einmal geschlossen wird.

Der wesentliche Vorteil dieser Anordnung besteht darin, dass bei der Montage des erfindungsgemäßen Fensterrollos die Zugstangenanordnung und die Betätigungselemente völlig getrennt voneinander eingebaut werden können. Erst nach dem vollständigen Einbau wird die Kupplung zwischen dem Betätigungselement und dem zugehörigen Führungskörper geschlossen, bzw. eingerastet, was jener Ausführung automatisch bei der ersten Betätigung erfolgt oder durch einen separaten Montageeingriff vorgenommen werden kann.

Es ist jedoch auch möglich, die Kupplung so zu gestalten, dass sie betriebsmäßig beliebig oft aus und eingerückt werden kann. Diese Ausführungsform ist von Vorteil, wenn die eingefahrene Endlage des Betätigungselementes nicht mit der konstruktiven Endlage der Zugstangenanordnung übereinstimmt. Solche Verhältnisse können auftreten, wenn das Betätigungselement gleichzeitig zum Ausführen einer weiteren Funktion benötigt wird, beispielsweise dem Öffnen oder Schließen von Klappen für den Schlitz, durch den hindurch die Rollobahn ausgezogen wird. Andere Beispiele sind die Möglichkeit der Betätigung einer weiteren Rollobahn, die auf einer separaten Wickelwelle aufgewickelt ist, mit ein und demselben Betätigungselement. Ein derartiges Fensterrollo für Kraftfahrzeuge ist aus der DE 100 57 763 A1 bekannt, auf die hier ausdrücklich Bezug genommen ist.

Während die einmal zu kuppelnde Kupplung beispielsweise eine Rastverbindung ist, besteht die mehrfach zu kuppelnde Anordnung aus zwei im weitesten Sinne hakenförmigen Kupplungshälften.

Damit eine einwandfreie Kupplung und Entkupplung zustande kommt, ist zweckmäßigerweise eine der Kupplungshälften in der Führungsschiene lediglich längsverschieblich, während die andere zusätzlich querbeweglich ist.

Um die Kupplung an der betriebsmäßigen richtigen Stellung ein- und auskuppeln zu lassen, ist einen Kulissenmechnik vorgesehen. Die Kulissenmechanik kann von einer Steuerschulter gebildet sein, die beispielsweise der Rand eine Öffnung ist, die in der Führungsnut zusätzlich ausgebildet ist.

Die Kraft, die dazu erforderlich ist, die Kupplungshälften ein- und auszurücken, kann aus der Betätigungskraft gewonnen werden. Hierzu sind die miteinander in Eingriff bringbaren Flächen an den Kupplungshälften entsprechend schräg verlaufend gestaltet. Zum Auskuppeln kann auch eine feststehende Steuerfläche verwendet werden. Die letzt genannte Ausführungsform verhindert eine ständig wirkende Kraft im Auskuppelsinne, was die Reibung und den Verschleiß der Führungsschienen erhöht.

Wenn die Anordnung derart getroffen wird, dass die Kupplung betriebsmäßig beliebig oft ein- oder auskuppelbar ist, kann das Betätigungselement auch dafür herangezogen werden, nach dem Auskuppeln durch einen Überhub, eine weitere Funktion auszuführen. Hierzu ist zweckmäßigerweise das andere Ende des Betätigungselementes ebenfalls mit einer entsprechenden Kupplungshälfte versehen, so dass beide Enden des Betätigungselementes gleich ausgeführt sind.

Aufgrund der speziellen zug- und druckfesten Kupplung mit dem Betätigungselement kann der Federmotor in der Wickelwelle verhältnismäßig sehr schwach ausgelegt sein.

Im übrigen sind Weiterbildungen der Erfindung Gegenstand von Unteransprüchen. Dabei sollen auch solche Merkmalskombinationen als beansprucht angesehen werden, auf die kein ausdrückliches Ausführungsbeispiel gerichtet ist.

In der Zeichnung ist ein Ausführungsbeispiel des Gegenstandes der Erfindung dargestellt. Es zeigen:
- Fig. 1: ein Kraftfahrzeug in einer Heckansicht, das mit einem erfindungsgemäßen Fensterrollo ausgestattet ist,
- Fig. 2: den prinzipiellen Grundaufbau des Fensterrollos nach Figur 1,
- Fig. 3: die Kupplung zwischen dem Betätigungselement und der Zugstangenanordnung, im eingekuppelten Zustand in einer Seitenansicht,
- Fig.4: die Kupplung nach Fig. 3 im Ausgekuppelten Zustand,
- Fig. 5: eine andere Gestaltung der mehrfach trennbaren Kupplung, in einer schematischen perspektivischen Darstellung im eingekuppelten Zustand,
- Fig. 6: die Kupplung nach Fig. 5 im Augeblick des Aus- bzw. Einkuppelns und
- Fig. 7: ein weiteres Ausführungsbeispiel für die Kupplung bei dem erfindungsgemäßen Fensterrollo.

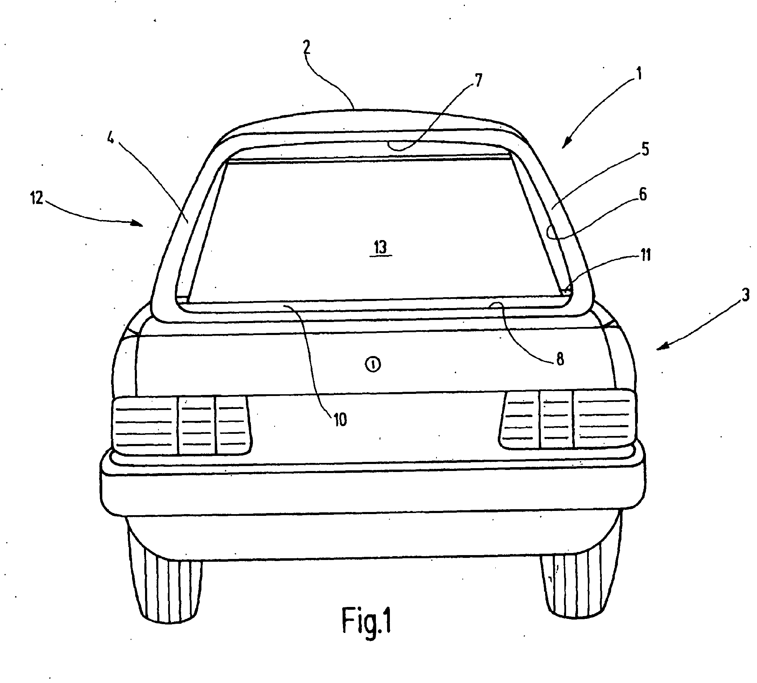

Figur 1 zeigt in einer schematischen Darstellung eine Rückansicht eines Pkw 1 mit einem Dach 2, einem Kofferraum 3 sowie zwei C-Säulen 4 und 5. Zwischen den beiden C-Säulen 4 und 5 befindet sich eine Heckfensteröffnung 6, die nach oben von einer Dachhinterkante 7 und nach unten von Fensterbrüstung 8 begrenzt ist. In der Heckfensteröffnung sitzt in bekannter Weise beispielsweise mittels Fenstergummi eingeklebt eine Heckscheibe 9.

Im Inneren des Pkw befindet sich vor der Innenseite der Heckscheibe 9 eine Hutablage 10, die sich zwischen der Fensterunterkante 8 und einer in der Figur nicht erkennbaren Rücksitzlehne horizontal erstreckt. In der Hutablage 10 verläuft ein gerader Auslaufschlitz 11.

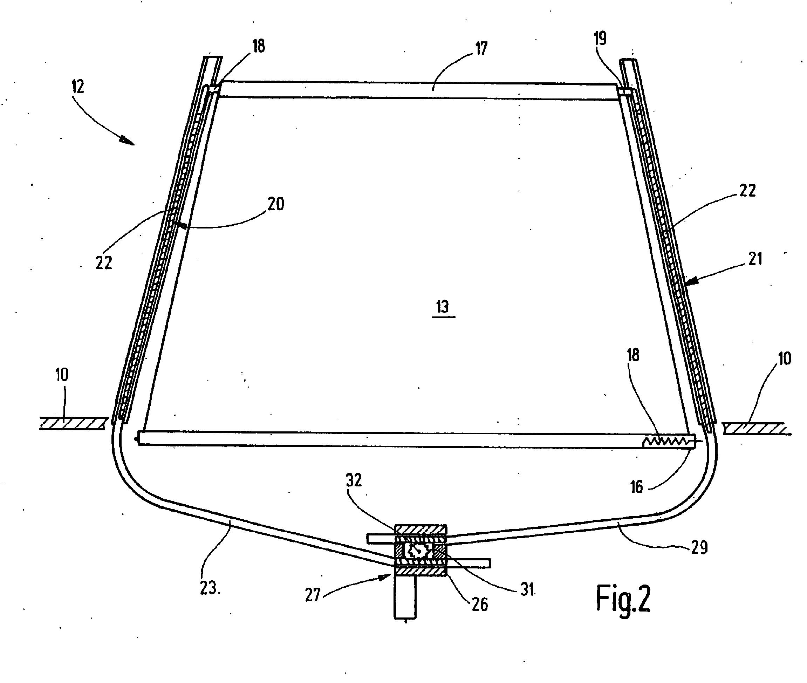

Der Auslaufschlitz 11 gehört zu einem Heckfensterrollo 12, dessen prinzipieller Aufbau in Figur 2 stark schematisiert veranschaulicht ist.

Das Heckfensterrollo 12 weist eine Rollobahn 13 auf, die in Figur 1 im ausgezogenen Zustand veranschaulicht ist. Sie hat einen trapezförmigen Zuschnitt um das in seiner Gesamtgestalt etwa trapezförmige Heckfenster abzuschatten.

Wie Figur 2 erkennen lässt, ist unter der Hutablage 10 eine Wickelwelle 16 drehbar gelagert. An dieser Wickelwelle 16 ist mit einer Kante die Rollobahn 13 befestigt. Ihre andere von der Wickelwelle 6 abliegende Kante ist mit einer Zugstabanordnung 17 verbunden.

Mittels eines Federmotors 18 innerhalb der Wickelwelle 16 wird die Wickelwelle 16 im Sinne des Aufwickelns der Rollobahn 13 vorgespannt.

Von der Zugstabanordnung 17 sind im Wesentlichen zwei teleskopartig verschiebbare Führungselemente 19 zu erkennen. Die teleskopartig verschiebbaren Führungselemente 19 laufen in zwei Führungsschienen 20 und 21, die innerhalb des Fahrzeugs jenseits der seitlichen Kanten des Fensters 6 verlaufen, so dass sie von außen nicht ersichtlich sind.

In den beiden Führungsschienen 20, 21 laufen Betätigungselemente 22. Die Führungsschienen 20 und 21 setzen sich unterhalb der Hutablage 10 in Führungsrohren 23 und 24 fort, über die Führungsschienen 21 und 20 mit einem Getriebe 26 eines Getriebemotors 27 gekuppelt sind. Die Betätigungselemente 22 führen durch die Führungsschienen 20 bzw. 21 sowie die Verbindungsrohre 23 und 24.

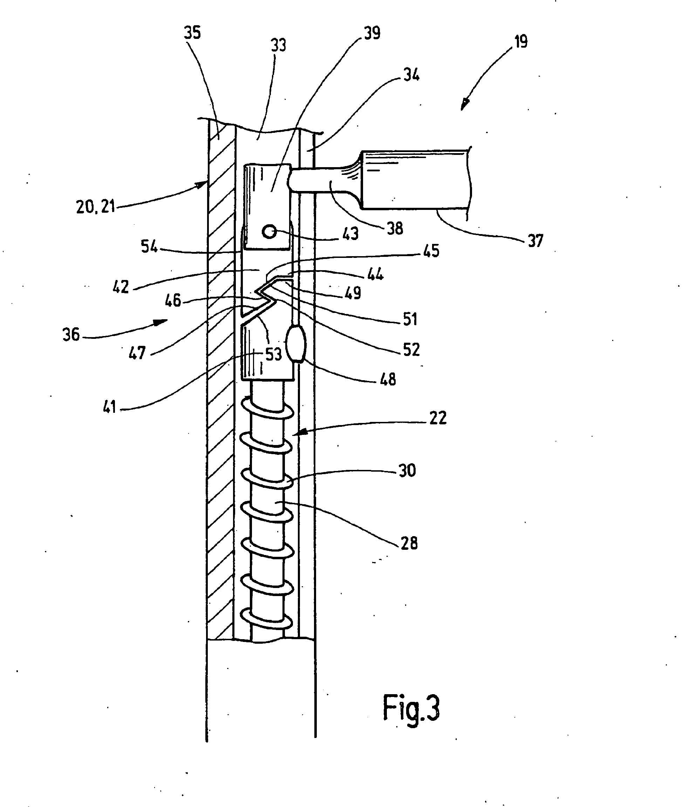

Bei den Betätigungselementen 22 handelt es sich um linienförmige flexible Elemente ähnlich Bowdenzügen, die wie die vergrößerte Darstellung von Fig. 3 zeigt, einen zylindrisches Kernelement 29 und auf dessen Außenseite mit einer schraubenförmig verlaufenden Rippe 30 versehen sind. Es entsteht eine Art schrägverzahnter Zahnstange. Mit Hilfe der Rippe 30 kämmen die Betätigungselemente 22 mit einem gestrichelt angedeuteten Ausgangszahnrad 31, das drehfest auf einer Ausgangswelle 32 des Getriebemotors 27 sitzt. Die beiden Betätigungselemente 22 führen an gegenüberliegenden Seiten an dem Zahnrad 31 tangential vorbei. Sie werden dadurch synchron in entgegengesetzte Richtungen bewegt.

Die Gestaltung der beiden Führungsschienen 20 und 21 ergibt sich aus der vergrößerten Darstellung von Figur 3. Jede Führungsschiene ist eine Art Rohr mit einer Führungsnut 33, die sich zu einer Seite in einem Führungsschlitz 34 nach außen hin öffnet. An der gegenüberliegenden Seite 34 bildet die Führungsschiene einen Rücken 35. Befestigungsflansche, die einstückig an die Führungsschiene 20 bzw. 21 angeformt sind, sind in der Figur aus Darstellungsgründen nicht erkennbar.

Jedes Betätigungselement 22 ist mit der Zugstangenanordnung 17 über eine zug- und druckfest wirkende Kupplung 36 gekuppelt. Die Zugstangenanordnung 17 umfasst das Führungselement 19, das einen zylindrischen Schaft 37 aufweist, der teleskopartig in einem Mittelstück der Zugstangenanordnung verschiebbar ist. An seinem der jeweiligen Führungsschiene 20, 21 benachbarten Ende geht der Schaft 37 in einen schlanken Halsteil 38 über, der durch den Schlitz 34 in die Führungsnut 33 hineinragt. An dem innenliegenden Ende trägt das Halsteil 38 einen Führungskörper 39, dessen Querschnittsgestalt an den Querschnitt der Führungsnut 33 angepasst ist. Der Führungskörper 39 ist in der Führungsnut 33 längs verschieblich, kann jedoch nicht um eine Achse parallel zu der Längsachse des Schaftes 3 gedreht werden.

Die Kupplung 36 besteht aus zwei Kupplungshälften 41 und 42. Die Kupplungshälfte 42 ist ein plattenförmiges Teil, das an dem Führungsstück 39 schwenkbar gelagert ist. Das Führungsstück 39 ist hierzu auf der dem Betätigungselement 22 zugekehrten Seite mit einem in der Figur nicht weiter erkennbaren Querschlitz versehen, so dass ein gegabeltes Maul entsteht. In diesem gegabelten Maul ist die Kupplungshälfte 42 gelagert. Sie wird dort mittels eines Scharnierbolzens 43, der durch entsprechende Bohrungen in dem Führungsstück 39 und dem der Kupplungshälfte 42 hindurch verläuft, schwenkbar gehalten. Die Achse des mit Hilfe des Bolzens 43 gebildeten Scharniers verläuft rechtwinklig zu der Längsachse des Schaftes 37.

Die Kupplungshälfte 42 ist an ihrem freien Ende, das von dem Führungsstück 39 abliegt, hakenförmig gestaltet. Das Maul des Hakens öffnet sich in Richtung auf den Schlitz 34. Im Einzelnen setzt sich das betreffende Ende der Kupplungshälfte 42 aus folgenden Flächen zusammen: Eine erste Fläche 44 verläuft parallel zu der Längsachse des Schaftes 37. Sie beginnt bei der dem Schlitz 34 benachbarten Seite des Kupplungsteils 42 und reicht etwa bis zu einem Drittel in die Führungsnut 33 hinein. An die Fläche 44 schließt sich eine Fläche 45 an, die unter einem Winkel von ca. 45° in Richtung auf die Rückwand 35 bzw. das Betätigungselement 22 verläuft. An ihrem der Rückwand 35 benachbarten Ende geht die Fläche 45 in eine Fläche 46 über, die sich in Richtung auf den Schlitz 34 erstreckt. Schließlich schließt sich an die Fläche 46 eine Fläche 47 an, die schräg zu der Rückwand 35 zurückführt. Die Flächen 44, 45, 46 und 47 stehen im übrigen senkrecht auf der gleichen Ebene.

Die Kupplungshälfte 41 ist eine Art Muffe, die auf dem Kernelement 28 festgeklemmt ist. An einer Umfangsseite ist an der Kupplungshälfte 41 eine Lasche 48 angequetscht, die als Verdrehsicherung in den Schlitz 34 hineinragt.

Die Kupplungshälfte 41 ist an ihrem von dem Betätigungselement 22 abliegenden Ende zu der Kupplungshälfte 42 komplementär gestaltet. Dies bedeutet, dass ihr am entferntesten liegendes Stirnende eine Fläche 49 bildet, die der Fläche 44 im eingekuppelten Zustand parallel gegenübersteht. Die Stirnfläche 49 geht in eine Fläche 51 über, die parallel zu der Fläche 45 verläuft. An die Fläche 51 schließt sich eine Fläche 52 an, die zu der Fläche 46 parallel ist, und schließlich ist eine Fläche 53 parallel zu der Fläche 47 ausgeführt. Die Flächen 49, 51, 52 und 53 erstrecken sich senkrecht zu der Zeichenebene.

Die laschenförmige Kupplungshälfte 42 ist in Querrichtung so bemessen, dass ihre Seite 54 parallel zu jenem Teil der Führungsnut 33 mit geringem Abstand verläuft, der der Rückseite 35 benachbart ist. Aufgrund der Anordnung kann die Kupplungshälfte 42 nicht aus der Verhakung mit der Kupplungshälfte 41 frei kommen, da das Spiel zwischen der Flanke 54 und der Wand der Führungsnut 33 kleiner ist, als der erforderliche Hub zum Aushaken.

Die Wirkungsweise der gezeigten Anordnung ist wie folgt:

Es sei angenommen, dass sich die Kupplung 36 in dem in Figur 3 gezeigten Zustand befindet. Wenn das Rollo 12 weiter ausgefahren werden soll, wird der Getriebemotor 27 derart in Gang gesetzt, dass die Betätigungselemente 22 in den beiden Führungsschienen 20 und 21 in Richtung auf das obere Ende der betreffenden Führungsschiene 20, 21 vorgeschoben werden. Dabei wird eine Stoß- oder Druckkraft von der Kupplungshälfte 41 auf die Kupplungshälfte 42 übertragen. Diese Stoßkraft lässt die beiden Flächen 44 und 49 stumpf aufeinander stoßen, so dass keine Kippkraft auf die Kupplungshälfte 42 übertragen wird und wenn, dann höchstens eine Kippkraft, die dazu führt, dass die Spitze zwischen den Flächen 46 und 47 tiefer in das Maul zwischen den Flächen 52 und 53 eindringt, weil die beiden Flächen 44 und 49 beispielsweise nur seitlich neben dem Scharnierbolzen 43 eine Schubkraft erzeugen. Die Druckkraft, die von dem Betätigungselement 22 ausgeübt wird, wird unmittelbar auf die Zugstangenanordnung 17 ausgeübt, so dass weiteres Material an Rollobahn 13, von der Wickewelle 16 gegen die Wirkung des Federmotors 18 abgewickelt wird.

Zum Einfahren des Rollos 12 wird der Motor 27 mit umgekehrter Drehrichtung in Gang gesetzt. Hierdurch werden die Betätigungselemente 22 aus den Führungsschienen 20 und 21 zurückgezogen. In dem Maße, in dem die Betätigungselemente 22 zurückweichen, wird auch die Zugstangenanordnung 17 folgen, da durch den Federmotor 18 ständig eine Zugkraft ausgeübt wird, die bestrebt ist, die Rollobahn 13 aufzuwickeln.

Sollte die Kraft, die der Federmotor 18 auf die Zugstabanordnung 17 ausübt, nicht ausreichen, überträgt das betreffende Betätigungselement eine Zugkraft auf die Zugstabanordnung. Diese Kraftübertragung geschieht über die miteinander verhakten Kupplungshälften 41 und 42 der Kupplung 35. Zur Zugkraftübertragung wird eine entsprechende Zugkraft über die Flächen 46 und 52 übertragen, so dass zwangsläufig das betreffende Ende der Zugstabanordnung 17 dem Zurückweichen des Betätigungselementes 22 folgt. Da die beiden 46 und 52 schräg bzgl. der Längserstreckung der Führungsschiene 20 bzw. 21 ausgerichtet sind, entsteht eine Kraftkomponente die bestrebt ist, die beiden Kupplungshälften 41 und 42 voneinander zu trennen. Eine Trennung kann jedoch nicht erfolgen, weil sich die Kupplungshälfte 42 mit ihrer Seitenflanke 54 an der Wand der Führungsnut 33 abstützt, während umgekehrt die Kupplungshälfte 41 gegen die andere Wand neben dem Schlitz 34 abgestützt wird.

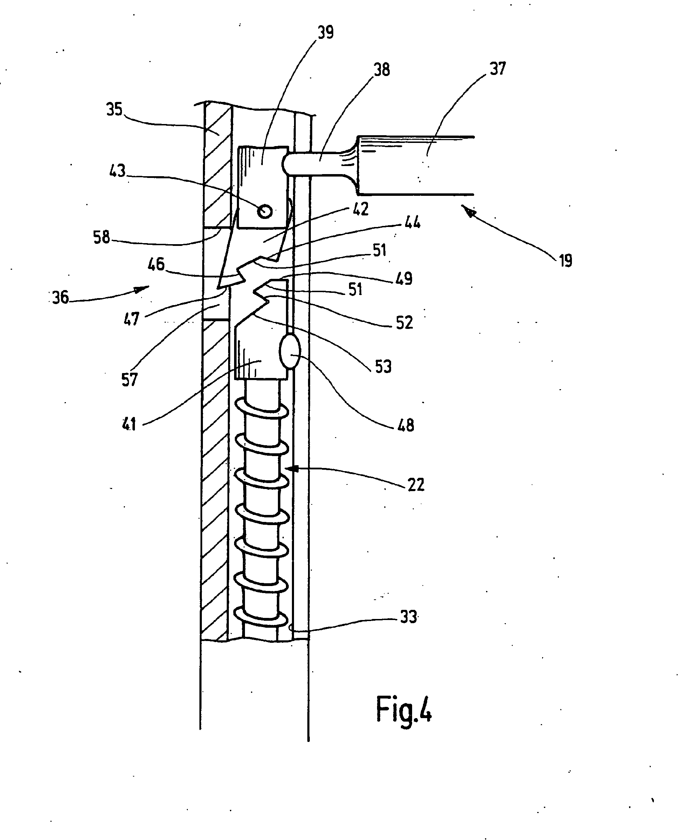

Ein Auskuppeln der Kupplung 36 ist erst dort möglich, wo, wie Figur 4 zeigt, in dem Verlauf der Führungsschiene 20 bzw. 21 eine schlitzartige Öffnung 7 in der Rückwand 35 vorgesehen ist. Die trennend wirkende Kraft, die an den Flächen 46 und 52 in Richtung quer zur Längserstreckung der Führungsschiene 21 wirksam ist, kann an dieser Stelle, wie gezeigt, die obere Kupplungshälfte 42 in Richtung von dem Schlitz 34 weg verschwenken, wodurch die beiden Kupplungshälften 41 und 42 außer Eingriff kommen.

Ab dieser Stelle, wird das Betätigungselement 22 seinen Weg alleine fortsetzen, während die Zugstangenanordnung 17 an dieser Stelle stehen bleiben wird.

Das Betätigungselement 22 kann folglich einen größeren Bewegungshub vollführen als die Zugstangenanordnung 17. Es ist dadurch möglich, das andere Ende des Betätigungselementes 22 dazu heranzuziehen, weitere Funktionen oder Betätigungen vorzunehmen, beispielsweise eine nicht veranschaulichte Klappe für den Schlitz zu schließen, oder eine zweite Rollobahn auszufahren, wie dies in der oben erwähnten Patentanmeldung erläutert ist.

Das erneute Einkuppeln der Kupplung 36 geschieht, indem ausgehend von der Darstellung von Figur 4 die Betätigungseinrichtung 22 nach oben wandert. Dabei wird die Fläche 29 mit der Ecke in Berührung kommen an der die Fläche 44 in Richtung auf den Schlitz 34 endet. Dies erzeugt eine Schubkraft und außerdem ein Drehmoment um den Scharnierbolzen 43. Beide Wirkungen gemeinsam führen dazu, dass die Zugstangenanordnung angehoben wird und eine in Bewegungsrichtung liegende Schulter 58 der Öffnung 57 fortschreitend beginnt, die obere Kupplungshälfte bezogen auf Figur 4, im Gegenuhrzeigersinn zurückzuschwenken, bis schließlich, wenn die Kupplungshälfte 42 die Öffnung 57 verlassen hat, wieder die Konfiguration nach Figur 3 erreicht ist.

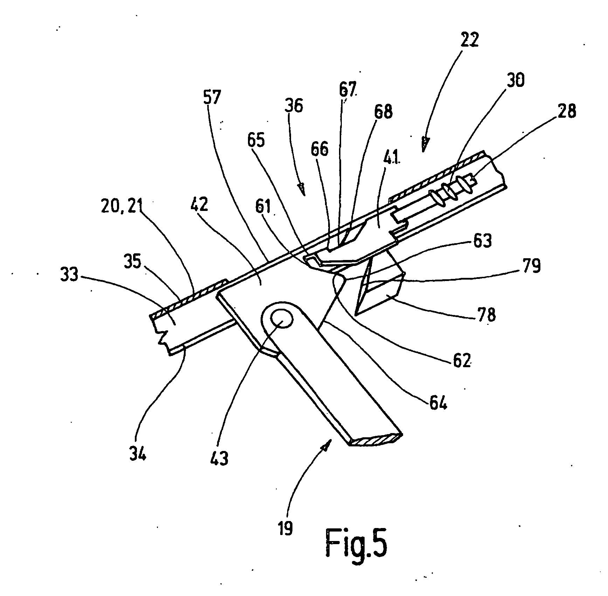

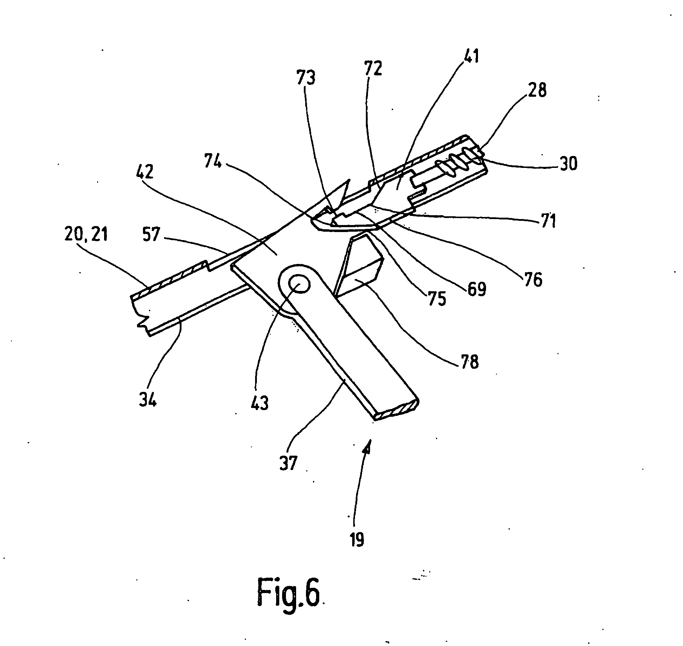

Bei dem zuvor beschriebenen Ausführungsbeispiel sind die Flächen 46 und 52 an den Kupplungshälften 41 und 42 so gestaltet, dass ständig eine entkuppelnde Kraft wirkt, wenn das Betätigungselement 22 ziehend auf das Führungselement 19 der Zugstangenanordnung 17 einwirkt. Je nach dem wie die Winkel der Flächen gewählt sind, wie der Reibschluss zwischen den Flächen aussieht und wie groß die Kraft ist, mit der die Betätigungselement 22 ziehen muss, entsteht eine mehr oder weniger große trennende Kraft, die bestrebt ist, die Kupplungshälfte 42 gegen die Rückwand 35 der Führungsschiene zu drücken. Wenn diese Wirkung unerwünscht ist, kann eine Ausführungsform gemäß den Figuren 5 und 6 verwendet werden.

Der Aufbau des Ausführungsbeispiels nach den Figuren 5 und 6 ist ähnlich wie bei dem zuvor beschriebenen Ausführungsbeispiel, weshalb auch Teile, die funktional einander entsprechen, mit demselben Bezugszeichen versehen sind. Die nachfolgende Beschreibung beschränkt sich dementsprechend auch auf die wesentlichen Unterschiede.

Gemäß dem Ausführungsbeispiel nach Figur 5 ist die Kupplungshälfte 42 unmittelbar an dem Führungselement 19 mit Hilfe des Scharnierbolzens 43 anscharniert. Das Führungsstück 39, das zuvor als Verbindung zwischen den Führungselementen 19 und der Kupplungshälfte 42 gedient hat, entfällt.

Die Kupplungshälfte 42 ist plattenförmig und weist an ihrem dem Betätigungselement 22 zugekehrten Ende eine hakenförmige Konfiguration auf, die sich in Richtung auf den Schlitz 34 öffnet.

Das Hakenmaul wird in Schubrichtung von einer Fläche 61 begrenzt, die rechtwinklig zu der Betätigungsachse durch das Betätigungselement 28 verläuft. Zur Schlitzseite der Führungsschiene 20, 21 hin geht die Fläche 61 in eine Schrägfläche 62 über, die aus dem Führungsschnitt 34 hinausragt. An einer neben dem Schlitz 34 liegenden Spitze 63 trifft die Fläche 63 mit einer Fläche 64 zusammen, die in Richtung auf das Führungselement 19 verläuft. Der genaue Verlauf ergibt sich aus der Darstellung nach Figur 5.

An dem innenliegenden Ende, d.h. dem zu dem Rücken 35 benachbarten Ende, geht die Fläche 61 in eine parallel zu dem Rücken 35 verlaufende Fläche 65 über. Die Flächen 61 und 65 schließen einen rechten Winkel miteinander ein. Die Fläche 65 endet an einer Fläche 66, die parallel zu der Fläche 61 verläuft, jedoch etwa halb so lang ist.

Eine Fläche 67 verläuft wiederum parallel zu der Fläche 65 und geht von der Fläche 66 aus, wobei sie an einer Fläche 68 endet, die unter einem spitzen Winkel in Richtung auf das Betätigungselement 28 bzw. den Rücken 35 zeigt.

Die Kupplungshälfte 41 ist komplementär und wie zuvor starr und unbeweglich an dem Betätigungselement 28 befestigt. Auch sie bildet einen Haken, dessen Hakenmaul von Flächen 69, 71 und 72 begrenzt ist. Die Fläche 69 liegt rechtwinklig zu der Längsachse der Führungsschiene 20, 21, die Fläche 71 in deren Längsrichtung und die Fläche 72 in einem Spitzen Winkel. Das hierdurch begrenzte Hakenmaul öffnet sich in Richtung auf den Rücken 35 der Führungsschiene 20 bzw. 21. Nach außen hin begrenzen die Kupplungshälfte 41 Flächen 73, 74, 75, und 76. Von diesen schließt die Fläche 73 an die Fläche 69 an und verläuft parallel zu der Fläche 71. Die Fläche 74 geht von der Fläche 73 aus und liegt parallel und im Abstand 69. An einem zu dem Schlitz 34 hin gelegenen Knick, schließt an die Fläche 74 die Fläche 75 an, die unter einem spitzen Winkel gegenüber der Längsachse der Führungsschiene 20, 21 liegt. Die Fläche 76 schließlich, die an die Fläche 75 anschließt, liegt parallel zu dem Rücken 35 und verläuft außerhalb des Schlitzes 34.

Um den Auskuppelvorgang zu steuern, ist schließlich ein Anschlag 78 mit einer schräg verlaufenden Steuerfläche 79 vorgesehen. Die Steuerfläche 79 wirkt in der weiter unten beschriebenen Weise mit der Fläche 64 zusammen. Die ortsfeste Steuerfläche 79 befindet sich wiederum auf der Höhe der schlitzartigen Öffnung 57. Der Anschlag 78 ist karosseriefest neben dem Schlitz 34 angebracht.

Die Funktionsweise der Anordnung nach den Figuren 5 und 6 sieht folgendermaßen aus:

Es wird zu nächst angenommen, dass sich die Kupplung 36, wie in Figur 5 gezeigt, im eingekuppelten Zustand befindet. In diesem Zustand liegt die Fläche 66 stumpf und glatt an der Fläche 69 an, wenn die Zugstangenanordnung 17, durch das Betätigungselement 28 gezogen werden muss. Da die beiden Flächen 66 und 69 rechtwinklig zu der Längsachse der Führungsschiene 20, 21 an der betreffenden Stelle verlaufen, entstehen durch die Flächen keine Kraftkomponenten, die bestrebt sind, die Flächen 66 und 69 voneinander zu trennen. Lediglich der zu der Scharnierachse 43 tangentiale Kraftangriff an der Kupplungshälfte 42 lässt ein kleines Drehmoment im Uhrzeigersinne entstehen.

Sollte hingegen aufgrund des Federmotors, der in der Wickelwelle sitzt und bestrebt ist, die Rollobahn 13 aufzuwickeln, die Zugstangenanordnung 17 gegen das Stirnende bzw. die Stirnfläche 74 gezogen werden, liegt die Fläche 74 stumpf an der Fläche 61 der Kupplungshälfte 42 an. Da auch diese beiden miteinander in Eingriff stehenden Flächen rechtwinklig zu der Längsachse zu der Führungsschiene 20, 21 verlaufen, entsteht auch hierdurch keine trennende Kraftkomponente. Darüber hinaus stehen in dem besagten Zustand die Flächen 68 und 72 im Abstand voneinander. Eine Kraft, die bestrebt ist, die Kupplungshälfte 42 zu verschwenken entsteht hierdurch ebenfalls nicht.

Wenn im Laufe des Einfahrens Schwergängigkeiten auftreten, zieht die Kupplungshälfte 41 die Kupplungshälfte 42 in Richtung auf die Rollowelle, wobei die Hakenflächen 66 und 69, wie gezeigt, miteinander in Berührung stehen. Die Kupplungshälfte 42 dient gleichzeitig als Führungsglied, für das Führungselement 19, weshalb es, wie gezeigt, durch den Schlitz 34 nach außen führt. Das Scharnier mit dem Scharnierbolzen 43 befindet sich abweichend von dem vorherigen Ausführungsbeispiel außerhalb der Führungsschiene 20, 21.

Im Verlauf der Bewegung der Zugstangenanordnung 17 und damit des Führungselemente 19, wird die Kupplungshälfte 41 den Anschlag 78 passieren. Während der weiteren Bewegung wird die Kupplungshälfte 41 mit der Spitze 63 auf die Steuerfläche 79 auftreffen. Die spezielle in Figur 5 gezeigte Ausrichtung der Steuerfläche 79 erzwingt eine Schwenkbewegung der Kupplungshälfte 42 im Gegenuhrzeigersinn, bezogen auf die Darstellung. Dieser Ausweichbewegung kann die starr an dem Betätigungselement 28 angebrachte Kupplungshälfte 41 nicht folgen. Dadurch werden die beiden Kupplungshälften 41 und 42 voneinander getrennt und gelangen in den Zustand nach Figur 6. Im Verlauf der Schwenkbewegung, wird die Kupplungshälfte 42, wie gezeigt, durch den länglichen Schlitz 57 zu der Rückseite hin austreten. Die Flächen 66 und 69 kommen außer Eingriff, womit das Betätigungselement 28 zusammen mit der Kupplungshälfte 41 in der Bewegungsrichtung nach rechts weiterlaufen kann, ohne die Kupplungshälfte 42 mehr mitzunehmen.

Die Lage der Flächen und die Gestaltung der Kupplungshälfte 42 ist im übrigen so, dass an anderen Stellen, als in der länglichen Öffnung 57 die beiden Kupplungshälften 41 und 42 auf keinen Fall außer Eingriff kommen können.

Soll hingegen die Rollbahn 13 ausgefahren werden, nähert sich die Kupplungshälfte 41 gemäß Figur 6 von rechts her kommen, der Kupplungshälfte 41, die an dem Anschlag 48 gestoppt ist. Die Ecke zwischen den beiden Flächen 74 und 75 wird im Verlauf der Bewegung auf die Fläche 62 auftreffen, die so geneigt, dass eine Kraftkomponente entsteht, die bestrebt ist, die Kupplungshälfte 42 im Uhrzeigersinn um den Scharnierbolzen 43 zu drehen. Gleichzeitig wird die Zugstangenanordnung 17 zusammen mit der Kupplungshälfte 42 von dem Anschlag 78 weggeschoben, so dass dessen Steuerfläche 79 die besagte Schwenkbewegung der Kupplungshälfte 42 nicht mehr behindert.

Die Schwenkbewegung der Kupplungshälfte 42 findet ihr Ende, sobald die Fläche 74 stumpf an der Fläche 61 anliegt. Da diese Flächen rechtwinklig zur Längserstreckung der Führungsschiene 20, 21 liegen, entsteht praktisch keine schwenkende Kraftkomponente mehr, die auf die Gestalt der Flächen zurückzuführen ist. Es verbleibt lediglich eine kleine Kraftkomponente, die ihre Ursache darin hat, dass der Kraftvektor, der beim Ziehen oder Drücken an den beiden Kupplungshälften 41 und 42 auftritt, im radialen Abstand zu dem Scharnierbolzen 43 verläuft.

Auch diese restlichen Kraftkomponenten lassen sich noch vermeiden, wenn, wie in den vorherigen Figuren gezeigt, der Scharnierbolzen 43 in die Führungsschiene 20, 21 verlagert wird, und zwar auf die Achse der Kraftwirkung zwischen den beiden Kupplungshälfte 41 und 42. Schließlich wäre auch daran zu denken, die Flächenpaare 61, 74 bzw. 66, 69 entsprechend schräg verlaufend auszurichten, damit sie eine Kraftkomponente erzeugen, die dem Drehmoment um den Scharnierbolzen 43 entgegenwirkt.

Die Ausführungsformen nach den vorherigen Figuren zeigen Kupplungen, die beliebig oft ein- und auskuppelbar ist, jedesmal dann, wenn die Kupplung 36 die Schulter 58 in der jeweiligen Richtung passiert.

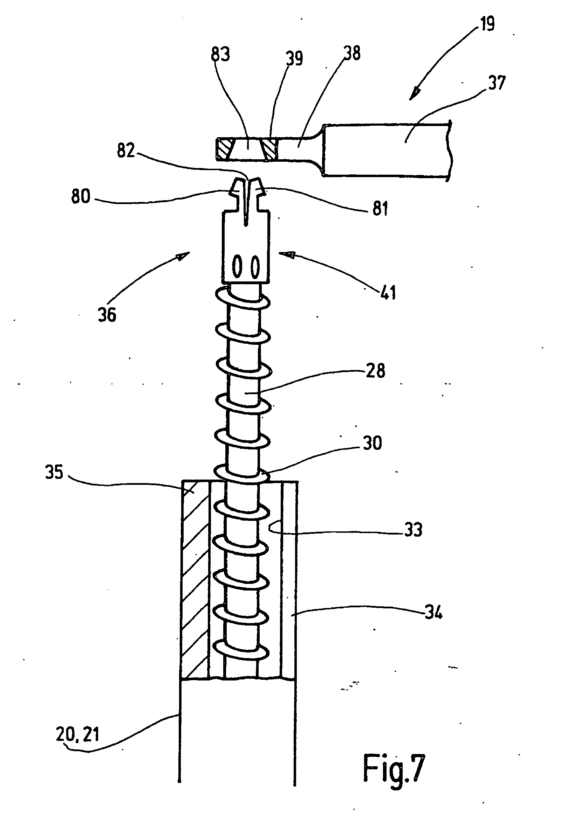

Wenn das Betätigungselement 22 keinen Überhub zu vollführen braucht, gleichwohl aber ein zuverlässiges Zurücklaufen der Zugstangenanordnung 17 in die Ruhe- oder Ausgangsstellung gewünscht ist, kann die schematisch gezeigte Kupplung nach Figur 7 verwendet werden. Bei dieser Kupplung handelt es sich letztendlich um eine Rastverbindung, die betriebsmäßig einmal einzukuppeln jedoch nicht mehr zu entkuppeln ist.

Die untere Kupplungshälfte 41 ist an ihrem von dem Kernelement 28 abliegenden Ende mit zwei Haken 80 und 81 versehen, die durch einen Schlitz 82 voneinander getrennt sind. Das Führungsstück 39 hat die Gestalt eines Rings mit einer durchgehenden Bohrung 83, die sich in Richtung auf die Kupplungshälfte 41 trichterförmig erweitert. Das Führungsstück 39 ist somit gleichzeitig die andere Kupplungshälfte, die der Kupplungshälfte 42 aus dem vorhergehenden Ausführungsbeispiel entspricht.

Die Kupplung 36 nach Figur 7 gestattet es, die Zugstangenanordnung in den Führungsschienen 20 und 21 selbständig zu positionieren und nachträglich oder zuvor unabhängig davon auch die Betätigungselemente 22 in die Führungsschienen 20, 21 einzufädeln. Sobald beide Elemente in der richtigen Weise positioniert sind, wird durch eine Bewegung des Führungsstücks 83 in Richtung auf das Betätigungselement 22 das Führungsstück 83 über die Haken 80 und 81 gestreift, die hierzu zusammen federn. Nach dem Überstreifen federn sie in ihre Ausgangslage zurück und verhaken sich an der Rückseite des Führungsstücks 83. Die Kupplung 36 ist damit eingerückt und in der Lage, von dem Betätigungselement 22 Zug- und Druckkräfte auf die Zugstangenanordnung 17 zu übertragen.

Ein Fensterrollo für Kraftfahrzeuge weist eine Zugstangenanordnung auf, die mit Hilfe von Betätigungselementen, die durch die Führungsschienen laufen, sowohl von der Wickelwelle weg als auch auf diese zu formschlüssig bewegt wird. Hierzu ist zwischen der Zugstangenanordnung und dem betreffenden Betätigungselement eine formschlüssig wirkende Kupplung vorgesehen.

## Patentansprüche

1. Fensterrollo (12) für Kraftfahrzeuge,
mit wenigstens einer drehbar gelagerten Wickelwelle (16),
mit wenigstens einer Rollobahn (13), die mit einer Kante an der Wickelwelle (16) befestigt ist,
mit Führungsmitteln (20,21), die sich jedes zumindest ein Stück weit seitlich neben der aufgespannten Rollobahn (13) erstrecken und die wenigstens eine Führungsnut (33) enthalten,
mit einer Zugstabanordnung (17), die an einer von der Wickelwelle (16) abliegenden Stelle der Rollobahn (13) mit der Rollobahn (13) verbunden ist und die an wenigstens einem Ende einen Führungskörper (39) aufweist, der in der wenigstens einen Führungsnut (33) geführt ist,
mit einem in der Führungsnut (33) laufenden Betätigungselement (22), das elastisch biegsam und linienförmig ist,
mit einer zwei Kupplungshälften (41,42) aufweisenden Kupplung (36), von denen eine an dem Führungskörper (39) und die andere an dem Betätigungselement (22) vorgesehen ist, und die derart gestaltet ist, dass sie zumindest einmal einkuppelbar ist, und
mit einer Antriebseinrichtung (18,27) zum Verschieben des Betätigungselements (22) längs der zugehörigen Führungsnut (20,21) und zum Drehen der Wickelwelle (16).

2. Fensterrollo nach Anspruch 1, **dadurch gekennzeichnet, dass** die Kupplungshälften (41,42) derart gestaltet sind, dass sie beliebig oft ein- und auskuppelbar sind.

3. Fensterrollo nach Anspruch 1, **dadurch gekennzeichnet, dass** die eine Kupplungshälfte (41) in der Führungsschiene (20,21) im Wesentlichen nur längsverschieblich und die andere Kupplungshälfte (42) zusätzlich querbeweglich ausgeführt ist.

4. Fensterrollo nach Anspruch 1, **dadurch gekennzeichnet, dass** die Kuppelbewegung durch eine Kulissenmechanik (46,52,58) gesteuert ist.

5. Fensterrollo nach Anspruch 4, **dadurch gekennzeichnet, dass** die Kulissenmechanik (46,52) eine Steuerschulter (58), umfasst.

6. Fensterrollo nach Anspruch 5, **dadurch gekennzeichnet, dass** die Steuerschulter (58) von einer Öffnung (57) in der Führungsnut (33) gebildet ist.

7. Fensterrollo nach Anspruch 1, **dadurch gekennzeichnet, dass** die Kupplungshälften (41,42) hakenförmig gestaltet sind und jede Kupplungshälfte (41,42) eine Kupplungsfläche (46,52) aufweist, die schräg gegenüber der Linearbewegung des Betätigungselementes (22) geneigt ist, derart, dass unter Zug eine Kraftkomponente entsteht, die bestrebt ist die Kupplungshälften (41,42) zu trennen.

8. Fensterrollo nach Anspruch 1, **dadurch gekennzeichnet, dass** eine der Kupplungshälften (41,42) eine Steuerfläche (44,49) aufweist, die derart gestaltet ist, dass bei einer Kraft, die bestrebt ist, die beiden Kupplungshälften aufeinander zu zubewegen, eine Kraftkomponente entstehen lässt, die bestrebt ist, die beiden Kupplungshälften (41,42) miteinander in Eingriff zu bringen.

9. Fensterrollo nach Anspruch 1, **dadurch gekennzeichnet, dass** die Kupplungshälften (41,42) hakenförmig gestaltet sind und jede Kupplungshälfte (41,42) eine Kupplungsfläche (62,75) aufweist, die schräg gegenüber der Linearbewegung des Betätigungselementes (22) geneigt ist, derart, dass unter Druck eine Kraftkomponente entsteht, die bestrebt ist die Kupplungshälften (41,42) einzukuppeln.

10. Fensterrollo nach Anspruch 1, **dadurch gekennzeichnet, dass** eine ortsfeste Steuerfläche (79) und eine funktional zugehörige Steuerfläche (64) an der Kupplungshälfte (42) vorgesehen sind, die derart gestaltet sind, dass bei einer Kraft, die bestrebt ist, die beiden Kupplungshälften (41,42) voneinander weg zu zubewegen, eine Kraftkomponente entstehen lässt, die bestrebt ist, die beiden Kupplungshälften (41,42) außer Eingriff zu bringen.

11. Fensterrollo nach Anspruch 1, **dadurch gekennzeichnet, dass** das von der Kupplung (36) abliegende Ende des Betätigungselementes (22) als Betätigungsglied für die Kupplung (36) ausgeführt ist.

12. Fensterrollo nach Anspruch 11, **dadurch gekennzeichnet, dass** das Betätigungsglied von einer weiteren Kupplungshälfte (41,42) gebildet ist.

13. Fensterrollo nach Anspruch 1, **dadurch gekennzeichnet, dass** die Kupplung (36) von einer Rastverbindung gebildet ist, die lediglich ein einmaliges Einrasten gestattet.

14. Fensterrollo nach Anspruch 1, **dadurch gekennzeichnet, dass** der Wickelwelle (16) ein Federmotor (18) zugeordnet ist, durch den die Wickelwelle (16) in Aufwickelrichtung der Rollobahn (13) vorgespannt ist.

15. Fensterrollo nach Anspruch 1, **dadurch gekennzeichnet, dass** die Führungsmittel (20,21) wenigstens eine Führungsschiene umfassen, in der die eine Führungsnut (33) enthalten ist.

16. Fensterrollo nach Anspruch 1, **dadurch gekennzeichnet, dass** die Führungsmittel (20,21) zwei Führungsschienen beidseits der ausgefahrenen Rollobahn (13) umfassen.

17. Fensterrollo nach Anspruch 1, **dadurch gekennzeichnet, dass** die Zugstabanordnung (17) aus einem Mittelstück und zwei gegenüber dem Mittelstück teleskopartig verschiebbaren Führungselementen (19) gebildet ist, die an ihren Enden jeweils einen Führungskörper (39) tragen.

18. Fensterrollo nach Anspruch 1, **dadurch gekennzeichnet, dass** die Führungsnut (33) eine hinterschnittene Nut ist, derart, dass der Nutenschlitz (34) eine geringere Weite aufweist, als der Innenraum der Führungsnut.

19. Fensterrollo nach Anspruch 1, **dadurch gekennzeichnet, dass** das Betätigungselement (22) aus einem Kernelement (28) und wenigsstens einer auf dem Kernelement (28) befindlichen schraubenförmig verlaufenden Rippe (30) besteht.

## Claims

1. Window roller blind (12) for motor vehicles,
with at least one rotatably mounted winding shaft (16),
with at least one blind sheet (13), which is fastened to the winding shaft (16) at one edge,
with guide elements (20, 21), each of which extends at least a short distance laterally next to the opened out blind sheet (13) and which contain at least one guide groove (33),
with a pull rod arrangement (17), which is connected to the blind sheet (13) at a location of the blind sheet (13) remote from the winding shaft (16) and
which at least at one end has a guide body (39), which is guided in the at least one guide groove (33),
with an elastically pliant and linear actuating element (22) running in the guide groove (33),
with a coupling (36) having two coupling halves (41, 42), one of which is provided on the guide body (39) and the other is provided on the actuating element (22), and which is configured in such a manner that it can be engaged at least once, and
with a drive means (18, 27) for displacing the actuating element (22) along the associated guide groove (20, 21) and for rotating the winding shaft (16).

2. Window roller blind according to Claim 1, **characterised in that** the coupling halves (41, 42) are configured in such a way that they can be engaged and disengaged as often as desired.

3. Window roller blind according to Claim 1, **characterised in that** one coupling half (41) is configured substantially to be only longitudinally displaceable in the guide rail (20,21) and the other coupling half (42) is configured to be additionally transversely movable.

4. Window roller blind according to Claim 1, **characterised in that** the coupling movement is controlled by a crank mechanism (46, 52, 58).

5. Window roller blind according to Claim 4, **characterised in that** the crank mechanism (46, 52) comprises a control shoulder (58).

6. Window roller blind according to Claim 5, **characterised in that** the control shoulder (58) is formed by an opening (57) in the guide groove (33).

7. Window roller blind according to Claim 1, **characterised in that** the coupling halves (41, 42) are hook-shaped and each coupling half (41, 42) has a coupling face (46, 52), which is inclined obliquely relative to the linear movement of the actuating element (22) in such a way that under traction a force component occurs, which endeavours to separate the coupling halves (41, 42).

8. Window roller blind according to Claim 1, **characterised in that** one of the coupling halves (41, 42) has a control face (44, 49), which is configured in such a way that upon a force, which endeavours to move the two coupling halves towards one another, a force component is allowed to occur, which endeavours to bring the two coupling halves (41, 42) into engagement with one another.

9. Window roller blind according to Claim 1, **characterised in that** the coupling halves (41, 42) are hook-shaped, and each coupling half (41, 42) has a coupling face (62, 75), which is inclined obliquely relative to the linear movement of the actuating element (22) in such a way that under pressure a force component occurs, which endeavours to couple the coupling halves (41, 42).

10. Window roller blind according to Claim 1, **characterised in that** a fixed control face (79) and a functionally associated control face (64) are provided on the coupling half (42), which are configured in such a way that upon a force, which endeavours to move the two coupling halves away from one another, a force component is allowed to occur, which endeavours to bring the two coupling halves (41, 42) out of engagement.

11. Window roller blind according to Claim 1, **characterised in that** the end of the actuating element (22) remote from the coupling (36) is configured as actuating member for the coupling (36).

12. Window roller blind according to Claim 11, **characterised in that** the actuating member is formed by a further coupling half (41, 42).

13. Window roller blind according to Claim 1, **characterised in that** the coupling (36) is formed by a catch connection, which only allows the arrangement to be locked in once.

14. Window roller blind according to Claim 1, **characterised in that** the winding shaft (16) has an associated spring motor (18), by means of which the winding shaft (16) is biased in the wind-up direction of the blind sheet (13).

15. Window roller blind according to Claim 1, **characterised in that** the guide elements (20, 21) comprise at least one guide rail, in which one guide groove (33) is contained.

16. Window roller blind according to Claim 1, **characterised in that** the guide elements (20, 21) comprise two guide rails on both sides of the extended blind sheet (13).

17. Window roller blind according to Claim 1, **characterised in that** the pull rod arrangement (17) is formed from a central piece and two guide elements (19), which are displaceable in the manner of a telescope relative to the central piece and which respectively bear a guide body (39) at their ends.

18. Window roller blind according to Claim 1, **characterised in that** the guide groove (33) is an undercut groove, such that the groove slot (34) has a smaller width than the interior of the guide groove.

19. Window roller blind according to Claim 1, **characterised in that** the actuating element (22) consists of a core element (28) and at least one rib (30) extending in a spiral shape and located on the core element (28).

## Revendications

1. Store à enrouleur (12) pour des véhicules automobiles, qui comprend :
- au moins un arbre d'enroulement (16) monté en rotation,
- au moins une bande de store (13) fixée par un bord sur l'arbre d'enroulement (16),
- des moyens de guidage (20, 21) dont chacun se trouve au moins un peu écarté latéralement de la bande de store étendue (13) et qui contient au moins une rainure de guidage (33),
- un système à tige de traction (17) qui est relié à la bande de store (13) en un endroit de celle-ci éloigné de l'arbre d'enroulement (16) et qui présente à au moins une extrémité un corps de guidage (39) se déplaçant dans au moins une rainure de guidage (33),
- un élément d'actionnement qui se déplace dans la rainure de guidage (33), qui a une forme linéaire et peut fléchir élastiquement,
- un accouplement (36) comportant deux moitiés d'accouplement (41, 42) prévues l'une sur le corps de guidage (39) et l'autre sur l'élément d'actionnement (22), cet accouplement étant constitué de manière à pouvoir être accouplé au moins une fois,
- un dispositif d'entraînement (18, 27) pour faire coulisser l'élément d'actionnement (22) le long de la rainure de guidage (20, 21) correspondante et pour faire tourner l'arbre d'entraînement (16).

2. Store à enrouleur selon la revendication 1, **caractérisé en ce que** les moitiés d'accouplement (41, 42) sont configurées de manière à pouvoir être accouplées et désaccouplées aussi souvent que l'on veut.

3. Store à enrouleur selon la revendication 1, **caractérisé en ce que** la moitié d'accouplement (41) ne peut essentiellement que coulisser longitudinalement dans le rail de guidage (20,21), tandis que l'autre moitié d'accouplement (42) peut de plus se déplacer transversalement.

4. Store à enrouleur selon la revendication 1, **caractérisé en ce que** le mouvement d'accouplement est commandé par un mécanisme à coulisse (46, 52, 58).

5. Store à enrouleur selon la revendication 4, **caractérisé en ce que** le mécanisme à coulisse (46, 52) comprend un épaulement de commande (58).

6. Store à enrouleur selon la revendication 5, **caractérisé en ce que** l'épaulement de commande (58) est constitué par une ouverture (57) dans la rainure de guidage (33).

7. Store à enrouleur selon la revendication 1, **caractérisé en ce que** les moitiés d'accouplement (41, 42) ont la forme de crochets et que chacune d'elles présente une portée d'accouplement (46, 52) qui est inclinée par rapport au déplacement linéaire de l'élément d'actionnement (22) de manière qu'une traction produise une composante de force qui tend à séparer les moitiés d'accouplement (41, 42).

8. Store à enrouleur selon la revendication 1, **caractérisé en ce qu'**une des moitiés d'accouplement (41, 42) présente une portée de commande (44, 49) configurée de manière qu'à une force qui tend à trop déplacer l'une sur l'autre les deux moitiés d'accouplement, elle peut opposer une composante de force qui tend à mettre en prise l'une avec l'autre les deux moitiés d'accouplement (41, 42).

9. Store à enrouleur selon la revendication 1, **caractérisé en ce que** les moitiés d'accouplement (41, 42) ont la forme de crochets, et que chacune d'elles présente une portée d'accouplement (62, 75) qui est inclinée par rapport au déplacement linéaire de l'élément d'actionnement (22) de manière qu'en poussée il se produit une composante de force qui tend à accoupler les moitiés d'accouplement (41, 42).

10. Store à enrouleur selon la revendication 1, **caractérisé en ce que** sont prévues une portée de commande fixe (79) et sur la moitié d'accouplement (42) une portée de commande (62) lui correspondant fonctionnellement, ces portées étant configurées de manière qu'en présence d'une force qui tend à écarter l'une de l'autre les deux moitiés d'accouplement (41, 42), peut apparaître une composante de force qui tend à amener hors de prise les moitiés d'accouplement (41, 42).

11. Store à enrouleur selon la revendication 1, **caractérisé en ce que** l'extrémité de l'élément d'actionnement (22) éloignée de l'accouplement (36) constitue un organe d'actionnement pour cet accouplement.

12. Store à enrouleur selon la revendication 11, **caractérisé en ce que** l'organe d'accouplement est constitué par une autre moitié d'accouplement (41, 42).

13. Store à enrouleur selon la revendication 1, **caractérisé en ce que** l'accouplement (36) est constitué par une liaison d'arrêt permettant une seule fois de réaliser un encliquetage.

14. Store à enrouleur selon la revendication 1, **caractérisé en ce qu'**à l'arbre d'enroulement (16) est associé un moteur à ressort par lequel cet arbre est précontraint dans le sens d'enroulement de la bande de store (13).

15. Store à enrouleur selon la revendication 1, **caractérisé en ce que** les moyens de guidage (20, 21) comprennent au moins un rail de guidage présentant une rainure de guidage (33).

16. Store à enrouleur selon la revendication 1, **caractérisé en ce que** les moyens de guidage (20, 21) comprennent deux rails de guidage disposés de part et d'autre de la bande de store (16) étendue.

17. Store à enrouleur selon la revendication 1, **caractérisé en ce que** le système à tige de traction (17) est constitué d'une pièce médiane et de deux éléments de guidage (19) pouvant coulisser télescopiquement par rapport à la pièce médiane et présentant chacun à une extrémité un corps de guidage (39).

18. Store à enrouleur selon la revendication 1, **caractérisé en ce que** la rainure de guidage (13) est une rainure en contredépouille, de sorte que la fente (34) de cette rainure présente une largeur inférieure à celle de l'espace interne de la rainure de guidage.

19. Store à enrouleur selon la revendication 1, **caractérisé en ce que** l'élément d'actionnement (22) est constitué par un élément central (28) portant au moins une nervure (30) l'entourant à la manière d'une hélice.
